# EUROPEAN PATENT APPLICATION

(11) **EP 4 492 697 A1**
(43) Date of publication of application: **15.01.2025**
(21) Application number: 22930251.8
(22) Date of filing: 08.03.2022
(51) Int. Cl.: H04B 5/00, H04W 52/26, H04W 52/02, H04W 52/24, H02J 50/27

(54) **ZERO-POWER COMMUNICATION METHOD AND APPARATUS, DEVICE AND MEDIUM**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN)
(74) Representative: Novagraaf Technologies
(86) International application number: PCT/CN2022/079787
(87) International publication number: WO 2023/168605

(57) **Abstract**

The present application discloses a zero-power communication method and apparatus, a device and a medium, which relate to the field of wireless communication. The method is executed by a zero-power device, and the zero-power device supports at least two reflection modes. The method comprises: receiving an incident signal; and in response to the triggering of the incident signal, determining a reflection mode of the zero-power device from among the at least two reflection modes.

## Description

### TECHNICAL FIELD

The present disclosure relates to the field of wireless communication, and in particular, relates to a method and apparatus for zero-power communication, and a device and a medium thereof.

### BACKGROUND

Zero-power communication is a communication method that achieves battery-free terminals, which meets the communication needs of the Internet of things (IoT) with ultra-low power consumption, very small size, and ultra-low cost. Devices that apply zero-power communication are referred to as zero-power devices.

Zero-power communication utilizes key techniques such as radio frequency (RF) power harvesting, backscattering, and low-power computing. For example, the technique of RF power harvesting is used to acquire energy by harvesting radio waves in space to drive the zero-power device. Furthermore, meanwhile, the techniques of backscattering and low-power computing enable the zero-power device to achieve an extremely simplified RF and baseband circuit structure.

### SUMMARY

Embodiments of the present disclosure provide a method and apparatus for zero-power communication, and a device and a medium thereof. The technical solutions are as follows.

According to one aspect of the present disclosure, a method for zero-power communication is provided. The method is applicable to a zero-power device, and the zero-power device supports at least two reflection modes. The method includes:
receiving an input signal; and
determining, in response to a trigger of the input signal, a reflection mode of the zero-power device from the at least two reflection modes.

According to one aspect of the present disclosure, a method for zero-power communication is provided. The method is applicable to a node device, and the method includes:
transmitting an input signal to a zero-power device, such that the zero-power device determines, in response to a trigger of the input signal, a reflection mode of the zero-power device from at least two reflection modes, wherein the zero-power device supports the at least two reflection modes.

According to one aspect of the present disclosure, an apparatus for zero-power communication is provided. The apparatus supports at least two reflection modes, and the apparatus includes a signal receiving module and a mode determining module; wherein
the signal receiving module is configured to receive an input signal; and
the mode determining module is configured to determine, in response to a trigger of the input signal, a reflection mode of the apparatus from the at least two reflection modes.

According to one aspect of the present disclosure, an apparatus for zero-power communication is provided. The apparatus at least two reflection modes and the apparatus includes a signal transmitting module; wherein
the signal transmitting module is configured to transmit an input signal to a zero-power device, such that the zero-power device determines, in response to a trigger of the input signal, a reflection mode of the zero-power device from the at least two reflection modes, wherein the zero-power device supports the at least two reflection modes.

According to one aspect of the present disclosure, a terminal device is provided. The terminal device includes a transceiver and a processor; wherein
the processor is configured to receive an input signal; and
the transceiver is configured to determine, in response to a trigger of the input signal, a reflection mode from at least two reflection modes.

According to one aspect of the present disclosure, a node device is provided. The node device includes a transceiver; wherein
the transceiver is configured to transmit an input signal to a zero-power device, such that the zero-power device determines, in response to a trigger of the input signal, a reflection mode of the zero-power device from at least two reflection modes, wherein the zero-power device supports the at least two reflection modes.

According to one aspect of the present disclosure, a computer-readable storage medium is provided. The computer-readable storage medium stores at least one executable instruction. The at least one executable instruction, when loaded and executed by a processor, causes the processor to perform the method for zero-power communication as described above.

According to one aspect of the present disclosure, a chip is provided. The chip includes at least one programmable logic circuit and/or at least one program instruction. The chip, when loading and running on a computer device, is caused to perform the method for zero-power communication as described above.

According to one aspect of the present disclosure, a computer program product is provided. The computer program product, when loaded and run on a processor of a computer device, causes the computer device to perform the method for zero-power communication as described above.

The technical solutions according to the embodiments of the present disclosure achieve at least the following beneficial effects.

The zero-power device supports at least two reflection modes, and, triggered by the received wireless signal, the zero-power device is capable of selecting a reflection mode from the at least two reflection modes, such that the zero-power device meets different communication needs by selecting the reflection mode.

### BRIEF DESCRIPTION OF DRAWINGS

For clearer descriptions of the technical solutions according to the embodiments of the present disclosure, the accompanying drawings required for describing the embodiments are briefly introduced below. Apparently, the accompanying drawings in the following description show merely some embodiments of the present disclosure, and those of ordinary skill in the art may still derive other drawings from these accompanying drawings without creative efforts.
FIG. 1 is a schematic diagram of a zero-power communication system according to some exemplary embodiments of the present disclosure;
FIG. 2 is a schematic diagram of a principle for backscattering communication according to some exemplary embodiments of the present disclosure;
FIG. 3 is a schematic diagram of a principle for energy harvesting according to some exemplary embodiments of the present disclosure;
FIG. 4 is a schematic diagram of a circuit principle for resistive load modulation according to some exemplary embodiments of the present disclosure;
FIG. 5 is a flowchart of a method for zero-power communication according to some exemplary embodiments of the present disclosure;
FIG. 6 is a flowchart of a method for zero-power communication according to some exemplary embodiments of the present disclosure;
FIG. 7 is a block structural diagram of an apparatus for zero-power communication according to some exemplary embodiments of the present disclosure;
FIG. 8 is a block structural diagram of an apparatus for zero-power communication according to some exemplary embodiments of the present disclosure; and
FIG. 9 is a schematic structural diagram of a communication device according to some exemplary embodiments of the present disclosure.

### DETAILED DESCRIPTION

For clearer descriptions of the objects, technical solutions, and advantages of the present disclosure, the embodiments of the present disclosure are further described in detail below with reference to the accompanying drawings.

The terms involved in the embodiments of the present disclosure are briefly described hereinafter firstly.

In recent years, zero-power devices have become more widely used.

One of the typical zero-power devices is a RF identification (RFID) tag, which utilizes spatial coupling of RF signals to achieve automatic transmission and identification of tag information without contact. RFID tags are also known as "RF tags" or "electronic tags". According to the different ways of power supply, the types of electronic tags are divided into active electronic tags, passive electronic tags, and semi-passive electronic tags. Active electronic tags, also known as active tags, indicate that the work energy of the electronic tags is provided by the battery. The battery, memory, and antenna together constitute the active electronic tag. Different from the activation mode of passive RF, the information is transmitted on a defined frequency band prior to the replacement of the battery. Passive electronic tags, also known as passive electronics, do not support the internal battery. When the passive electronic tag closes to a reader/writer, the tag is in a near-field range formed by radiation of an antenna for the reader/writer, an antenna for the electronic tag produces an inductive current through the electromagnetic induction, the inductive current drives a chip circuit of the electronic tag, and the chip circuit transmits identification information stored in the tag to the reader/writer over the antenna for the electronic tag. Semi-active electronic tags inherit the advantages of small size, light weight, low price, and long service life of passive electronic tags. the built-in battery, in the absence of reader/writer access, only supplies power to very few circuits within the chip, and the built-in battery supplies power to the RFID chip only when the reader/writer is accessed, such that the reading and writing distance of the tag is increased, and thus the reliability of communication is improved.

RFID is a wireless communication technology. The most basic RFID system is composed of two parts: the electronic tag and the reader/writer. The electronic tag consists of coupling components and chips, and each electronic tag has a unique electronic code, which is placed on a target object to be measured to mark the target object. Reader/writer is not only capable of reading the information on the electronic tag, but also capable of writing the information on the electronic tag, and at the same time provides the energy needed for communication for the electronic tag. Upon entering the electromagnetic field, the electronic tag receives RF signals from the reader/writer. The passive electronic tag or the passive tag transmits the information stored in the electronic tag using the energy acquired by the electromagnetic field generated in space. The reader/writer reads and decodes the information, and thus the electronic tag is recognized.

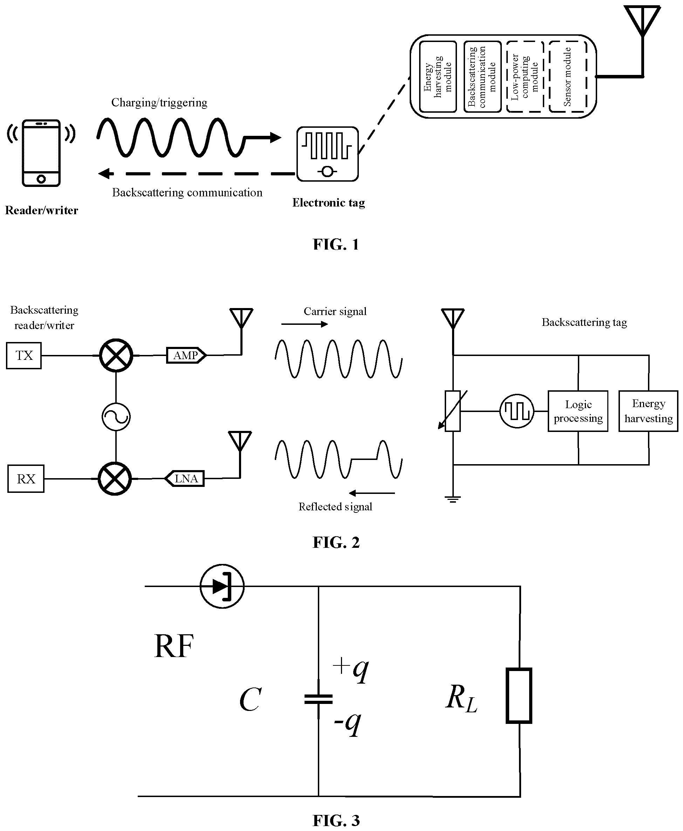

The key techniques of zero-power communication include energy harvesting, backscattering communication, and low-power computing. As shown in FIG. 1, a typical zero-power communication system includes a reader/writer and a zero-power device (i.e., an electronic tag in the figure). The reader/writer transmits radio waves to provide energy to the zero-power device. An energy harvesting module installed in the zero-power device collects the energy carried by the radio wave in space (FIG. 1 shows the radio wave transmitted by the reader/writer) to drive a low-power computing module of the zero-power device and achieve the backscattering communication. Upon acquiring energy, the zero-power device is capable of receiving control commands from the reader/writer and transmitting data to the reader/writer by backscattering based on the control signaling. The transmitted data comes from the data stored in the zero-power device itself (e.g., identification or pre-written information, such as the production date of goods, brand, and manufacturer). The zero-power device is also loaded with various types of sensors, such that the data collected by various types of sensors is reported based on the zero-power mechanism.

Communication based on the zero-power device is referred to as zero-power communication, which includes the following key techniques.

### Backscattering Communication

FIG. 2 illustrates a schematic diagram of backscattering communication. As shown in FIG. 2, the zero-power device (i.e., a backscattering tag in FIG. 2) receives a carrier signal from a backscattering reader/writer and collects energy by a RF power harvesting module. In this way, the zero-power device supplies power to a low-power processing module (a logic processing module in FIG. 2), modulates an incoming wave signal, and performs backscattering.

The main features are as follows.
(1) The zero-power device does not actively transmit signals and achieves backscattering communication by modulating incoming wave signals.
(2) The zero-power device does not rely on a conventional active amplifier transmitter and also uses a low-power computing unit, such that the hardware complexity is greatly reduced.
(3) Battery-free communication is achieved by the combination of energy harvesting.

### Energy Harvesting (RF Power Harvesting)

FIG. 3 illustrates a schematic diagram of energy harvesting. As shown in FIG. 3, the spatial electromagnetic wave energy is collected using an RF module by electromagnetic induction, such that the driving of load circuits (low-power computing, sensors, and the like) is achieved, and thus battery-free communication is achieved.

### Load Modulation

The load modulation is a method often used by the electronic tag for transmitting data to the reader/writer. The load modulation adjusts an electric parameter of an oscillation circuit of the electronic tag in accordance with the beat of data flow, such that the size and phase of an impedance of the electronic tag are changed accordingly, and thus the process of modulation is completed.

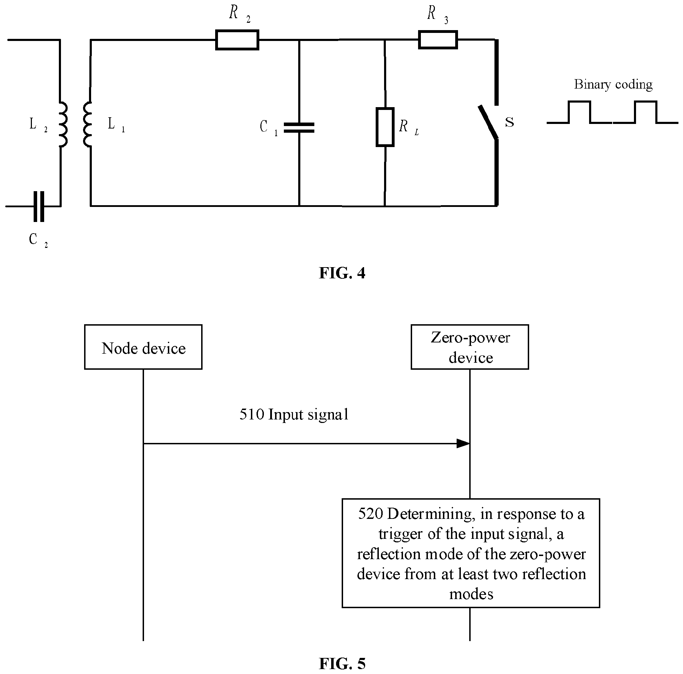

The load modulation technique mainly has two ways, resistance load modulation and capacitance load modulation. In the resistance load modulation, the load is connected in parallel with a resistor, called a load modulation resistor, the resistor is turned on and off according to a clock of the data flow, and the turn-on or turn-off of the switch S is controlled by binary data coding. The circuit schematic of the resistance load modulation is shown in FIG. 4.

### Coding

For data transmitted by the electronic tag, binary "1" and "0" may be represented by using different forms of codes. The RFID system usually uses one of: non-return zero (NRZ) coding, Manchester coding, unipolar return zero coding (URZ), differential binary phase (DBP) coding, Miller coding, or differential coding. In layman's terms, binary "1" and "0" are represented by different pulse signals.

### Power Sourcing Signal and Activation Signal in Zero-Power Communication System

### 1) Power Sourcing Signal

The carrier of the power sourcing signal is a base station, a smart phone, a smart gateway, a charging station, or a micro base station.

In terms of frequency band, a radio wave used for power sourcing is low frequency, medium frequency, or high frequency.

In terms of waveform, a radio wave used for power sourcing is a sine wave, a square wave, a triangular wave, a pulse, or a rectangular wave.

In addition, a radio wave is a continuous wave or a non-continuous wave (i.e., allowing for a certain amount of time interruption).

The power sourcing signal is one of signals specified in the 3GPP standard, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), or a physical broadcast channel (PBCH).

### 2) Activation Signal

The carrier of the activation signal is a base station, a smart phone, or a smart gateway.

In terms of frequency band, a radio wave used for activation is low frequency, medium frequency, or high frequency.

In terms of waveform, a radio wave used for activation is a sine wave, a square wave, a triangular wave, a pulse, or a rectangular wave.

In addition, the radio wave is a continuous wave or a non-continuous wave (i.e., allowing for a certain amount of time interruption).

The activation signal is one of the signals specified in the 3GPP standard, such as an SRS, a PUSCH, a PRACH, a PUCCH, a PDCCH, a PDSCH, a PBCH, or a new signal.

### Cellular Passive IoT

With the increase of applications in the 5G industry, there are more and more types of connection objects and application scenarios, and thus there will be higher requirements on the price and power consumption of communication terminals. The application of battery-free and low-cost IoT devices becomes a key technology for cellular IoT, such that the type and number of linked terminals of the 5G network are increased, and thus Internet of everything is truly achieved. The development of low-power devices is probably in the direction of lower power or zero power, and in addition to 3GPP, RFID and IEEE 802.11ah technologies have provided some ultra-low-power solutions:
1) NR Idle: RF and baseband are still working.
2) Very Low-power (VLP): main RF modules are dormant or turned off.
3) Almost Zero-power (AZP): turn-on or turn-off of the main RF and baseband modules are determined by the envelope detection of the activation or wake-up signal (from the RF module).
4) Zero-power (ZP): external RF or other energy is harvested to fulfill circuit consumption and communication requirements.

Ultra-low or zero-power devices often have poor capabilities of reception or demodulation, and generally can only support simple energy detection or amplitude-shift keying (ASK)/frequency-shift keying (FSK) modulation and demodulation. Often the energy collected by these devices is only used to transmit simple information with a single and predefined reflection mode, such as using RFID, reflecting Bluetooth broadcasts, reflecting 802.11ah signals, or even simple preamble of LTE.

As communication technologies evolve, communication with multiple reflection modes may also be supported by zero-power devices. How to control or switch reflection modes is an issue that needs to be discussed and addressed.

In response to the above problem, the zero-power device in the embodiments of the present disclosure supports at least two reflection modes, and, triggered by a received input signal, the zero-power device is capable of selecting a reflection mode from the at least two reflection modes, such that the zero-power device satisfies different communication needs by performing the selection of reflection modes.

It should be understood that the method for zero-power communication according to the embodiments of the present disclosure is applicable to an RFID technology-based zero-power communication system shown in FIG. 1 and is also applicable to other forms of zero-power communication systems, which are not limited herein.

Furthermore, with respect to the method for zero-power communication according to the embodiments of the present disclosure, it is mainly considered that the zero-power device transmits a reflected signal by driving backscattering through RF power harvesting, and other forms of power sourcing such as heat, pressure, or light are not ruled out. The power sourcing signal is related to the RF capability of the zero-power device and has a minimum input power requirement. Moreover, the power sourcing signal and the carrier signal are the same one, which are the same-frequency signals or dissimilar signals, and this also depends on the RF capability of the zero-power device (the number of channels that can be supported by the device). The power sourcing signal and the carrier signal are together or separated. The energy conversion and storage efficiency of the zero-power device is certain, so in the case that the power sourcing signal and the carrier signal are separated, the power loss of the carrier signal and the reflected signal is within a certain range and is estimated, which is determined by the hardware capability of the zero-power device itself. The energy of the power sourcing signal is only used for energy storage and driving the circuit, and the power intensity of the power sourcing signal should at least meet the input sensitivity requirement of the zero-power device.

The method for zero-power communication according to some embodiments of the present disclosure is further described hereinafter.

FIG. 5 illustrates a flowchart of a method for zero-power communication according to some exemplary embodiments of the present disclosure. The method is applicable to a zero-power communication system, and the method includes the following processes.

In process 510, a node device transmits an input signal to a zero-power device.

Accordingly, the zero-power device receives the input signal.

In some embodiments of the present disclosure, the zero-power device supports at least two reflection modes. Thus, the zero-power device in the embodiments of the present disclosure is considered as a device that supports multiple reflection modes.

The reflection mode refers to a mode composed of various technical features employed by the zero-power device in the process of performing zero-power communication. The reflection mode in some embodiments of the present disclosure is understood as an operating mode, a transmission mode of a reflection link, a backscattering mode, or a transmission mode. In addition, the reflection mode in the embodiments of the present disclosure not only corresponds to a situation in which the zero-power device perform backscattering communication; it also corresponds to a situation in which the zero-power device actively transmits a transmission signal. In this case, the "reflected signal" in the embodiments of the present disclosure is construed to be the "transmission signal" actively transmitted by the zero-power device.

In some embodiments, the at least two reflection modes are predefined in the communication protocol, the at least two reflection modes are configured on the network device side for the zero-power device, or the at least two reflection modes are customized by the zero-power device.

In some embodiments, the node device includes a network device, such as a base station; or a customer premise equipment (CPE).

In process 520, the zero-power device determines, in response to a trigger of the input signal, a reflection mode of the zero-power device from at least two reflection modes.

Upon receiving the input signal, the zero-power device selects or switches the reflection mode of the zero-power device from the at least two reflection modes.

In some embodiments, that the zero-power device determines the reflection mode of the zero-power device from the at least two reflection modes includes: selecting, by the zero-power device, a first reflection mode from the at least two reflection modes as the reflection mode of the zero-power device.

It should be appreciated that the above "selecting" refers to an initial selection, which is a selection of the zero-power device in the case of an initial access, i.e., a first selection. Exemplarily, prior to the initial selection, the zero-power device is not in an operating state and is not in any of the reflection modes, and in response to the trigger of the input signal, the zero-power device selects a first reflection mode from the at least two reflection modes as a post-access reflection mode.

In some embodiments, that the zero-power device determines the reflection mode of the zero-power device from the at least two reflection modes includes: switching, by the zero-power device, the reflection mode from a second reflection mode to the first reflection mode.

It will be appreciated that the above "switching" refers to a re-selection, which is a selection by the zero-power device upon completion of an access, i.e., an n^{th} selection, n being an integer greater than 1. Exemplarily, prior to the switching, the zero-power device is in the second reflection mode, and in response to the trigger of the input signal, the zero-power device selects the first reflection mode from at least two reflection modes and switches from the second reflection mode to the first reflection mode.

In some embodiments, the trigger of the input signal described above refers to a trigger by a signal feature of the input signal, or the trigger of the input signal refers to a trigger by information acquired by demodulation of the input signal.

In some embodiments, that the zero-power device selects or switches the reflection mode of the zero-power device from at least two reflection modes in response to the trigger of the input signal includes the following.

1) In response to the trigger of the input signal, the zero-power device specifies one of the at least two reflection modes for selecting or switching.

Exemplarily, in response to the trigger of the input signal, the zero-power device determines to select or switch to a reflection mode a of the at least two reflection modes based on some information of the input signal.

2) The at least two reflection modes have a selection order, and in response to the trigger of the input signal, the zero-power device determines one of the reflection modes to be selected or switched to accordingly based on the selection order.

Exemplarily, from the at least two reflection modes, a next reflection mode to be selected by the zero-power device based on the selection order is the reflection mode a. In response to the trigger of the input signal, the zero-power device then selects the reflection mode a as a current reflection mode based on the selection order.

In summary, in the method for zero-power communication according to the embodiments of the present disclosure, the zero-power device supports at least two reflection modes, and triggered by the received input signal, the zero-power device is capable of selecting a reflection mode from the at least two reflection modes, such that the zero-power device meets different communication needs by performing the selection of the reflection mode.

In some exemplary embodiments, the input signal is defined. The input signal includes at least one of:
a power sourcing signal, configured to supply power to the zero-power device;
a carrier signal, configured to trigger, as an incoming signal, the zero-power device to transmit a reflected signal; or
an activation signal, configured to activate the zero-power device to transmit a reflected signal by a first reflection method.

Exemplarily, the contents defined in the first reflection method include at least one of a type of information carried by the reflected signal or an operating frequency point of the reflected signal. That is, the activation signal is configured to activate the zero-power device to transmit the reflected signal carrying a specified type of information via an operating frequency point.

It should be understood that the activation signal is not a mandatory signal in the zero-power communication system, and the zero-power communication system may transmit the reflected signal based on a predetermined reflection method without activation of the activation signal. In addition, the activation signal in the embodiments of the present disclosure is referred to as a trigger signal or a wake-up signal.

In some embodiments, the power sourcing signal, the carrier signal, and the activation signal are mutually independent; the power sourcing signal and the carrier signal are mutually coupled, and the power sourcing signal and the activation signal are mutually independent; the activation signal and the carrier signal are mutually coupled, and the activation signal and the power sourcing signal are mutually independent; the activation signal and the power sourcing signal are mutually coupled, and the activation signal and the carrier signal are mutually independent; or the power sourcing signal, the carrier signal, and the activation signal are mutually coupled.

The term "mutually independent" means that signals are independent in at least one of an operating frequency, an operating time, or an operating spatial direction.

The term "mutually coupled" means that signals are coupled in at least one of an operating frequency, an operating time, or an operating spatial direction.

As described above, the power sourcing signal, the carrier signal, and the activation signal are in fact a combined single signal or a plurality of separated signals.

In some exemplary embodiments, a reflection mode is defined. Two different reflection modes differ in at least one of the following.

### Communication Protocol Type of Reflected Signal

Exemplarily, the communication protocol type includes RFID; Bluetooth, such as Bluetooth low energy (BLE); wireless fidelity (Wi-Fi) 802.11ah; LTE; or narrow band Internet of things (NB-IoT).

### Packet Size of Reflected Signal

Exemplarily, the packet size includes [x, y] bytes and [y, z] bytes. The above x, y, and z are unequal positive numbers, z is greater than y, and y is greater than x.

### Information Type of Reflected Signal

Exemplarily, the information type includes device information of the zero-power device, such as a tag identification (ID); sensing information of the zero-power device, such as temperature information and pressure information acquired using a sensor; security information, such as private information; and non-security information, such as information that is not private.

### Reflection Period of Reflected Signal

Exemplarily, the reflection period includes one reflection at every 100 ms and one reflection at every 500 ms.

### Data Rate of Reflected Signal

Exemplarily, the data rate includes 10 kbps, 100 kbps, and 1000 kbps.

### Operating Frequency of Reflected Signal

Exemplarily, the operating frequency includes 2.4 GHz, 900 MHz, and 800 MHz.

### Operating Frequency of Input Signal

Exemplarily, the operating frequency includes 2.4 GHz, 900 MHz, or 800 MHz.

### Reflection modes defined by using different terms are illustrated exemplarily hereinafter.

Reflection mode 1, 900 MHz supply signal/carrier signal/reflected signal + WiFi 802.11ah reflected signal.

That is, the power sourcing signal and the carrier signal in this reflection mode are the one and the same signal, which operates at 900 MHz, and the reflected signal operates at the same frequency as the carrier signal, which also operates at 900MHz; and, the reflected signal corresponds to the protocol type of Wi-Fi 802.11ah.

Reflection mode 2: 900 MHz power sourcing signal + 2.4 GHz carrier signal/reflected signal, Bluetooth BLE broadcast.

That is, the power sourcing signal and the carrier signal in this reflection mode are not the one and the same signal, the power sourcing signal operates at 900 MHz, and the carrier signal and the reflected signal operate at 2.4 GHz; and, the reflected signal corresponds to the protocol type of Bluetooth BLE.

Reflection mode 3: 2.4 GHz power sourcing signal/carrier signal/activation signal/reflected signal, Bluetooth BLE broadcast.

That is, the power sourcing signal, the carrier signal, and the activation signal in this reflection mode are the one and the same signal, which operates at 2.4 GHz, and the reflected signal operates at the same frequency as the carrier signal, which also operates at 2.4 GHz; and, the reflected signal corresponds to the protocol type of Bluetooth BLE.

Reflection mode 4: the zero-power device transmits a reflected signal, such as a reflected signal with a tag ID, once a received carrier signal of the corresponding frequency meets a certain signal intensity requirement.

The above-mentioned reflection mode 4 is understood as a normal reflection mode.

Reflection mode 5: in addition to the carrier signal, an additional activation signal is required, and upon receiving and demodulating the activation signal correctly, the zero-power device then controls to transmit a reflected signal with safety information, such as temperature and heart rate.

The above-described reflection mode 5 is understood as a safety reflection mode.

In the exemplary embodiments, there exist several different implementations of the input signal triggering the zero-power device to perform the selection or switching of the reflection mode.

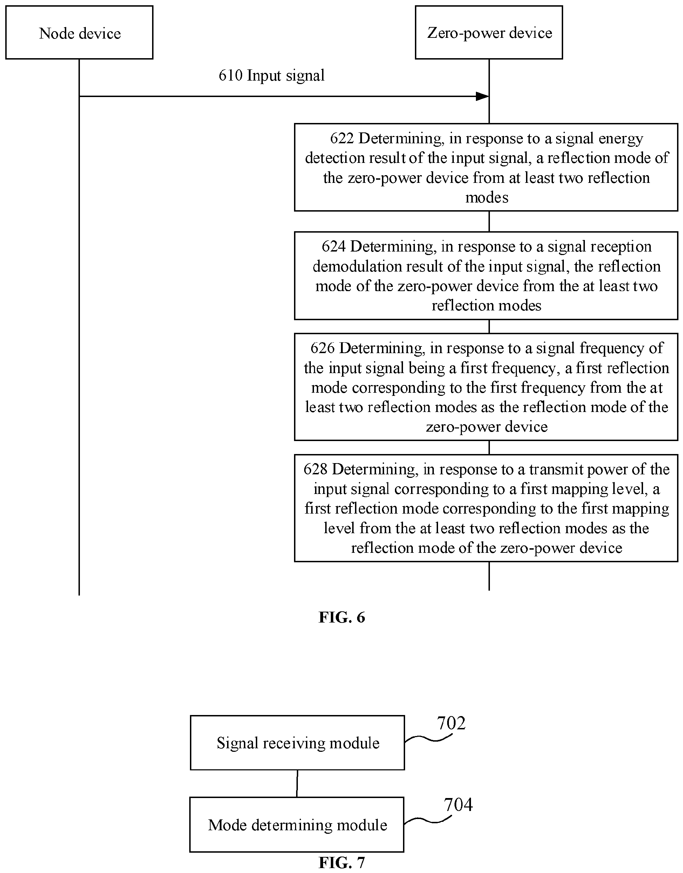

FIG. 6 illustrates a flowchart of a method for zero-power communication according to some exemplary embodiments of the present disclosure. The method is applicable to a zero-power communication system, and the method includes the following processes.

In process 610, a node device transmits an input signal to a zero-power device.

Accordingly, the zero-power device receives the input signal.

For the specific implementation of this process, reference is made to process 510 above, which is not repeated herein.

In process 622, the zero-power device determines, in response to a signal energy detection result of the incident signal, a reflection mode of the zero-power device from at least two reflection modes.

Upon receiving the input signal, the zero-power device performs signal energy detection on the input signal to acquires the signal energy detection result. In the case that the signal energy detection result meets a trigger condition, the zero-power device performs selection or switching of the reflection mode of the zero-power device from the at least two reflection modes.

In some embodiments, the signal energy detection result includes at least one of an amplitude of the energy or a time-domain feature of the energy.

Exemplarily, the signal energy detection result is the amplitude of the energy. Accordingly, process 622 is alternatively implemented as follows: in response to the amplitude of the energy of the input signal reaching a first threshold, a first reflection mode corresponding to a first frequency is determined from the at least two reflection modes as the reflection mode of the zero-power device, wherein the first threshold is one threshold of at least one threshold that triggers determining the reflection mode.

For example, in the case that the amplitude of the energy of the input signal reaches a threshold a and the threshold a corresponds to a reflection mode a, and the zero-power device is in a reflection mode prior to receiving the input signal, the zero-power device switches from the reflection mode b to the reflection mode a.

Exemplarily, the signal energy detection results is the time-domain feature of the energy. Accordingly, process 622 is alternatively implemented as follows: in response to the time-domain feature of the energy of the input signal being a first time-domain feature, a first reflection mode is determined as the reflection mode of the zero-power device from the at least two reflection modes based on an order indicated by a list of predefined reflection modes, wherein the list of predefined reflection modes includes at least two reflection modes, and the first time-domain feature is one time-domain feature of at least one time-domain feature that triggers determining the reflection mode.

For example, in the case that the time-domain feature of the input signal is a periodic repetition pattern or a repetition pulse, such as a signal or a pulse signal with the same waveform that is periodically repeated three times, and in the case that the zero-power device is in a reflection mode b prior to receiving the input signal and a next reflection mode in the list of predefined reflection modes is a reflection mode a, then the zero-power device switches from the reflection mode b to reflection mode a.

For example, in the case that the detection result of the time-domain feature of the input signal is three consecutive pulses within 1 ms, and in the case that the zero-power device is in the reflection mode b prior to receiving the input signal, and the next reflection mode in the predetermined list of reflection modes is the reflection mode a, the zero-power device switches from the reflection mode b to the reflection mode a.

In process 624, the zero-power device determines, in response to a signal reception demodulation result of the input signal, the reflection mode of the zero-power device from the at least two reflection modes.

Upon receiving the input signal, the zero-power device demodulates the input signal to acquire the signal reception demodulation result, and in the case that the signal reception demodulation result meets the trigger condition, the zero-power device selects or switches the reflection mode of the zero-power device from the at least two reflection modes. It should be understood that demodulation is generally the signal envelope detection.

In some embodiments, the signal reception demodulation result includes at least one of information acquired by demodulation or a phase conversion feature acquired by demodulation.

Exemplarily, the signal reception demodulation result is the information acquired by demodulation. Accordingly, process 624 is alternatively implemented as follows: in response to the information acquired by demodulating the input signal is first information, a first reflection mode corresponding to the first information is determined from the at least two reflection modes as the reflection mode of the zero-power device, wherein the first information is one of at least one information that triggers determining the reflection mode.

For example, in the case that the information acquired by demodulating the input signal is reflection mode indicating information and the reflection mode indicating information is indicative of a reflection mode a, and in the case that the zero-power device is in a reflection mode b prior to receiving the input signal, the zero-power device switches from the reflection mode b to the reflection mode a.

Exemplarily, the signal reception demodulation result is the phase conversion feature acquired by demodulation. Accordingly, process 624 is alternatively implemented as follows: in response to the phase conversion feature acquired by demodulating the input signal is a first phase conversion feature, a first reflection mode is determined as the reflection mode of the zero-power device from the at least two reflection modes based on an order indicated by a list of predefined reflection modes, wherein the list of predefined reflection modes includes at least two reflection modes, and the first phase conversion feature is one of at least one phase conversion feature that triggers determining the reflection mode.

For example, in the case that the phase conversion feature acquired by demodulating the input signal includes three consecutive phase flips, and in the case that the zero-power device is in a reflection mode b prior to receiving the input signal and a next reflection mode in the list of predefined reflection modes is a reflection mode a, the zero-power device switches from the reflection mode b to the reflection mode a.

In process 626, the zero-power device determines, in response to a signal frequency of the input signal being a first frequency, a first reflection mode corresponding to the first frequency from the at least two reflection modes as the reflection mode of the zero-power device.

The first frequency is one of at least one frequency that triggers determining the reflection mode.

Upon receiving the input signal, the zero-power device determines the signal frequency of the input signal and acquires that the signal frequency of the input signal is the first frequency, and in the case that the first frequency has a correspondence with the first reflection mode and the zero-power device is not currently in an operating state or the current reflection mode is not the first reflection mode, the zero-power device selects or switches to the first reflection mode as the reflection mode of the zero-power device.

In some embodiments, the frequency that triggers determining the reflection mode is a specific frequency other than an power sourcing frequency, a carrier frequency, and an activation frequency. The aforementioned power sourcing frequency, carrier frequency, and activation frequency are the same frequency or different frequencies.

In process 628, the zero-power device determines, in response to a transmit power of the input signal corresponding to a first mapping level, a first reflection mode corresponding to the first mapping level from the at least two reflection modes as the reflection mode of the zero-power device.

The first mapping level is one mapping level of at least one mapping level that triggers determining the reflection mode.

Upon receiving the input signal, the zero-power device determines the transmit power of the input signal and acquires that the transmit power of the input signal corresponds to the first mapping level, and in the case that the first mapping level has a correspondence with the first reflection mode and the zero-power device is not currently in an operating state or the current reflection mode is not the first reflection mode, the zero-power device selects or switches to the first reflection mode as the reflection mode of the zero-power device.

Exemplarily, the correspondence between the transmit power, the mapping level, and the reflection mode is illustrated in conjunction with the following list.

| Transmit Power of Input Signal | Mapping Level | Reflection Mode |
|---|---|---|
| 33 dBm to 31 dBm | Level 1 | Reflection mode 1 |
| 31 dBm to 29 dBm | Level 2 | Reflection mode 2 |
| 29 dBm to 27 dBm | Level 3 | Reflection mode 3 |
| ... | ... | ... |

As shown in the list above, a maximum value of the transmit power of the input signal is 33 dBm, which is adjusted by converting the value to a mapping level in every 2 dB step, and the zero-power device is controlled to reflect reflected signals in different reflection modes at different mapping levels.

It should be appreciated that the aforementioned processes 622 to 628 are capable of controlling the reflection mode of the zero-power device individually or are combined to jointly control the reflection mode of the zero-power device.

An exemplary description of process 624 and process 628 jointly controlling the reflection mode of the zero-power device is given hereinafter.
(a) A CPE or a base station (as a signal source and power source) initially connects or activates the zero-power device with full power; and upon the initial access, the zero-power device reflects its basic information (e.g., device type) and confirms the access feedback.
(b) Based on the intensity of the feedback signal and the device type, the base station adjusts the transmit power of transmitting signals and reduces the transmit power to a new power level, which ensures that the reflected signal from the zero-power device is still received.

For example, the transmit power is adjusted according to coarse adjustment in a large interval followed by fine adjustment in a small interval. Different transmit powers correspond to different power sourcing durations and different time delays for feedback, which determines the different reflection modes of the zero-power device.

(c) In the case that the fixed or low mobility condition is configured and the zero-power device also meets the fixed or low mobility condition, a correspondence between the mapping level and the reflection mode of the transmit power is established.

(d) In the case that the zero-power device has a simple receiver capability and enables envelope detection and downlink power control to adjust the amplitude of the transmitted downlink signal, the zero-power device receives the downlink signal and demodulates the corresponding control information such as the signal amplitude. The control information determines the corresponding reflection mode of the zero-power device.

In summary, in the method for zero-power communication according to the embodiments, there exist a variety of different implementations of the input signal triggering the zero-power device to perform the selection or switching of the reflection mode, such that the zero-power device performs the selection of the reflection mode more flexibly.

It should be noted that the above method embodiments are implemented separately or in combination, which is not limited herein.

FIG. 7 illustrates a block structural diagram of an apparatus for zero-power communication according to some exemplary embodiments of the present disclosure. The apparatus for zero-power communication is implemented as a zero-power device, or a part of a zero-power device. The apparatus includes a signal receiving module 702 and a mode determining module 704.

The signal receiving module 702 is configured to receive an input signal.

The mode determining module 704 is configured to determine a reflection mode of the apparatus from at least two reflection modes in response to a trigger of the input signal.

In some optional embodiments, the at least two different reflection modes differ in at least one of:
a communication protocol type of a reflected signal;
a packet size of a reflected signal;
an information type of a reflected signal;
a reflection period of a reflected signal;
a data rate of a reflected signal;
an operating frequency of a reflected signal; or
an operating frequency of the input signal.

In some optional embodiments, the mode determining module 704 is configured to determine the reflection mode of the apparatus from the at least two reflection modes in response to a signal energy detection result of the input signal; or
the mode determining module 704 is configured to determine the reflection mode of the apparatus from the at least two reflection modes in response to a signal reception demodulation result of the input signal; or
the mode determining module 704 is configured to determine, in response to a signal frequency of the input signal being a first frequency, a first reflection mode corresponding to the first frequency as the reflection mode of the apparatus from the at least two reflection modes, wherein the first frequency is one of at least one frequency that triggers determining the reflection mode; or
the mode determining module 704 is configured to determine, in response to a transmit power of the input signal corresponds to a first mapping level, a first reflection mode corresponding to the first mapping level from the at least two reflection modes as the reflection mode of the apparatus, wherein the first mapping level being one of at least one mapping level that triggers determining the reflection mode.

In some optional embodiments, the mode determining module 704 is configured to determine, in response to an amplitude of the energy of the input signal reaching a first threshold, a first reflection mode corresponding to a first frequency from the at least two reflection modes as the reflection mode of the apparatus, wherein the first threshold is one of at least one threshold that triggers determining the reflection mode; or
the mode determining module 704 is configured to determine, in response to a time-domain feature of the energy of the input signal being a first time-domain feature, a first reflection mode from the at least two reflection modes as the reflection mode of the apparatus based on an order indicated by a list of predefined reflection modes, wherein the list of predefined reflection modes includes the at least two reflection modes, and the first time-domain feature is one of at least one time-domain feature that triggers determining the reflection mode.

In some optional embodiments, the mode determining module 704 is configured to determine, in response to information acquired by demodulating the input signal being first information, a first reflection mode corresponding to the first information from the at least two reflection modes as the reflection mode of the apparatus, wherein the first information is one of at least one information that triggers determining the reflection mode; or
the mode determining module 704 is configured to determine, in response to a phase conversion feature acquired by demodulating the input signal being a first phase conversion feature, a first reflection mode as the reflection mode of the apparatus from the at least two reflection modes based on an order indicated by a list of predefined reflection modes, wherein the list of predefined reflection modes includes the at least two reflection modes, and the first phase conversion feature is one of at least one phase conversion feature that triggers determining the reflection mode.

In some optional embodiments, the input signal includes at least one of:
a power sourcing signal, configured to supply power to the apparatus;
a carrier signal, configured to trigger, as an incoming signal, the apparatus to transmit a reflected signal; or
an activation signal, configured to activate the apparatus to transmit a reflected signal by a first reflection mode.

In some optional embodiments, the power sourcing signal, the carrier signal, and the activation signal are mutually independent; or
the power sourcing signal and the carrier signal are mutually coupled, and the power sourcing signal and the activation signal are mutually independent; or
the activation signal and the carrier signal are mutually coupled, and the activation signal and the power sourcing signal are mutually independent; or
the activation signal and the power sourcing signal are mutually coupled, and the activation signal and the carrier signal are mutually independent; or
the power sourcing signal, the carrier signal, and the activation signal are mutually coupled.

In some optional embodiments, the term "mutually independent" indicates that two signals are independent in at least one of: an operating frequency, an operating time, or an operating spatial direction.

In some optional embodiments, the term "mutually coupled" indicates that two signals are coupled in at least one of: an operating frequency, an operating time, or an operating spatial direction.

In some optional embodiments, the mode determining module 704 is configured to select a first reflection mode from the at least two reflection modes as the reflection mode of the zero-power device; or
the mode determining module 704 is configured to switch the reflection mode of the zero-power device from a second reflection mode to the first reflection mode.

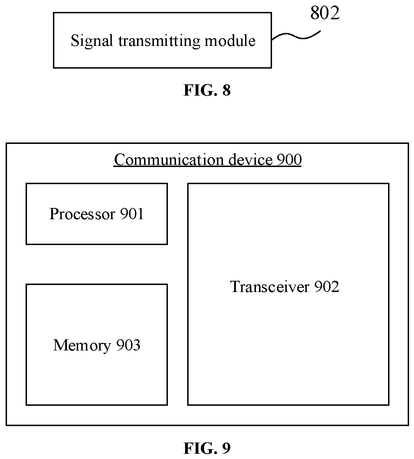

FIG. 8 illustrates a block structural diagram of an apparatus for zero-power communication according to some exemplary embodiments of the present disclosure, which is implemented as a node device or a part of a node device. The apparatus includes a signal transmitting module 802.

The signal transmitting module 802 is configured to transmit an input signal to a zero-power device, such that the zero-power device determines a reflection mode of the zero-power device from at least two reflection modes in response to a trigger of the input signal. The zero-power device supports the at least two reflection modes.

In some optional embodiments, the at least two different reflection modes differ in at least one of:
a communication protocol type of a reflected signal;
a packet size of a reflected signal;
an information type of a reflected signal;
a reflection period of a reflected signal;
a data rate of a reflected signal;
an operating frequency of a reflected signal; or
an operating frequency of the input signal.

In some optional embodiments, the zero-power device determines the reflection mode of the zero-power device from the at least two reflection modes in response to a signal energy detection result of the input signal; or
the zero-power device determines, in response to a signal reception demodulation result of the input signal, the reflection mode of the zero-power device from the at least two reflection modes; or
the zero-power device determines, in response to a signal frequency of the input signal being a first frequency, a first reflection mode corresponding to the first frequency as the reflection mode of the zero-power device from the at least two reflection modes, wherein the first frequency is one of at least one frequency that triggers determining the reflection mode; or
the zero-power device determines, in response to a transmit power of the input signal corresponding to a first mapping level, a first reflection mode corresponding to the first mapping level from the at least two reflection modes as the reflection mode of the zero-power device, wherein the first mapping level is one of at least one mapping level that triggers determining the reflection mode.

In some optional embodiments, the zero-power device determines, in response to an amplitude of the energy of the input signal reaching a first threshold, a first reflection mode corresponding to a first frequency from the at least two reflection modes as the reflection mode of the zero-power device, wherein the first threshold is one of at least one threshold that triggers determining the reflection mode; or
the zero-power device determines, in response to a time-domain feature of the energy of the input signal being a first time-domain feature, a first reflection mode from the at least two reflection modes as the reflection mode of the zero-power device based on an order indicated by a list of predefined reflection modes, wherein the list of predefined reflection modes includes the at least two reflection modes, and the first time-domain feature is one of at least one time-domain feature that triggers determining the reflection mode.

In some optional embodiments, the zero-power device determines, in response to information acquired by demodulating the input signal being first information, a first reflection mode corresponding to the first information from the at least two reflection modes as the reflection mode of the zero-power device, wherein the first information is one of at least one information that triggers determining the reflection mode; or
the zero-power device determines, in response to a phase conversion feature acquired by demodulating the input signal being a first phase conversion feature, a first reflection mode as the reflection mode of the zero-power device from the at least two reflection modes based on an order indicated by a list of predefined reflection modes, wherein the list of predefined reflection modes includes the at least two reflection modes and the first phase conversion feature is one of at least one phase conversion feature that triggers determining the reflection mode.

In some optional embodiments, the input signal includes at least one of:
a power sourcing signal, configured to supply power to the zero-power device;
a carrier signal, configured to trigger, as an incoming signal, the zero-power device to transmit a reflected signal; or
an activation signal, configured to activate the zero-power device to transmit a reflected signal by a first reflection mode.

In some optional embodiments, the power sourcing signal, the carrier signal, and the activation signal are mutually independent; or
the power sourcing signal and the carrier signal are mutually coupled, and the power sourcing signal and the activation signal are mutually independent; or
the activation signal and the carrier signal are mutually coupled, and the activation signal and the power sourcing signal are mutually independent; or
the activation signal and the power sourcing signal are mutually coupled, and the activation signal and the carrier signal are mutually independent; or
the power sourcing signal, the carrier signal, and the activation signal are mutually coupled.

In some optional embodiments, the term "mutually independent" indicates that two signals are independent in at least one of: an operating frequency, an operating time, or an operating spatial direction.

In some optional embodiments, the term "mutually coupled" indicates that two signals are coupled in at least one of: an operating frequency, an operating time, or an operating space direction.

In some optional embodiments, the zero-power device selects a first reflection mode from the at least two reflection modes as the reflection mode of the zero-power device; or
the zero-power device switches the reflection mode from a second reflection mode to the first reflection mode.

In some optional embodiments, the node device includes: a network device; or a CPE.

FIG. 9 illustrates a schematic structural diagram of a communication device according to some exemplary embodiments of the present disclosure. The communication device 900 includes a processor 901, a transceiver 902, and a memory 903.

The processor 901 includes one or more processing cores, and the processor 901 runs various functional applications by running software programs and modules.

The transceiver 902 is configured to receive and transmit information, and the transceiver 902 may be a communication chip.

The memory 903 is configured to store at least one computer program. The processor 901 is configured to load and run the at least one computer program to perform the processes performed by the communication device in the method embodiments described above.

In addition, the memory 903 is implemented by any type of volatile or non-volatile storage device or a combination thereof. The volatile or non-volatile storage device includes, but are not limited to: a random-access memory (RAM), a read-only memory (ROM), an erasable programmable read-only memory (EPROM), an electrically erasable programmable read-only memory (EEPROM), a flash memory, or other solid-state storage technologies, a compact disc read-only memory (CD-ROM), a high-density digital video disc (DVD), or other optical storage, tape cartridges, magnetic tapes, disk storage, or other magnetic storage devices.

The processor 901 and transceiver 902 involved in the embodiments of the present disclosure perform the processes performed by the zero-power device in the method shown in either of FIS. 5 and FIG. 6 above, which are not described herein.

In some embodiments, the processor 901 is configured to receive an input signal;

The transceiver 902 is configured to determine a reflection mode from at least two reflection modes in response to a trigger of the input signal.

The processor 901 and the transceiver 902 involved in the embodiments of the present disclosure perform the processes performed by the node device in the method shown in either FIG. 5 and FIG. 6 above, which are not repeated herein.

In some embodiments, the transceiver 902 is configured to transmit an input signal to a zero-power device, such that the zero-power device determines a reflection mode of the zero-power device from at least two reflection modes in response to a trigger of the input signal, wherein the zero-power device supports the at least two reflection modes.

In some exemplary embodiments, a computer-readable storage medium is provided. The computer-readable storage medium stores at least one instruction, at least one program, a code set, or an instruction set therein. The at least one instruction, the at least one program, the code set, or the instruction set, when loaded and executed by a processor, causes the processor to perform the method for zero-power communication as described above.

In some exemplary embodiments, a chip is provided. The chip includes at least one programmable logic circuit and/or at least one program instruction. The chip, when running, is caused to perform the method for zero-power communication as described above.

In some exemplary embodiments, a computer program product is provided. The computer program product, when loaded and run on a processor of a computer device, causes the computer device to perform the method for zero-power communication as described above.

Those of ordinary skill in the art understand that, all or some of the processes for practicing the above embodiments may be performed by hardware or may be performed by a program that instructs the associated hardware. The program may be stored in a computer-readable storage medium, and the storage medium referred to above may be a ROM, a disk, or a CD-ROM.

It should be understood that the terms "system" and "network" are often used interchangeably herein. The term "and/or" herein describes an associated relationship between associated objects, and indicates that three types of relationships. For example, the phrase "A and/or B" means (A), (B), or (A and B). In addition, the symbol "/" herein generally indicates an "or" relationship between the associated objects. It should also be understood that the term "indicate" mentioned in the embodiments of the present disclosure means a direct indication, an indirect indication, or an indication of an associated relationship. For example, A instructing B may mean that that A indicates B directly, e.g., B may be acquired by A; or that A indicates B indirectly, e.g., A indicates C by which B may be acquired; or that an association is present between A and B. It should also be understood that the term "correspondence" mentioned in the embodiments of the present disclosure may refer to a direct or indirect correspondence between two objects, an associated relationship between the two objects, an indicating and being indicated relationship, or a configuring and being configured relationship. It should also be understood that the terms "predefined," " defined in a protocol," "predetermined," or "predefined rules" referred to in the embodiments of the present disclosure may be implemented by storing a corresponding code, form, or other means that may be used to indicate relevant information in a device (e.g., including a network device and a user device) in advance, and the specific ways of implementation are not limited in e the present disclosure. For example, "predefined" may mean "defined in a protocol". It should also be understood that, in the embodiments of the present disclosure, the "protocol" may refer to a standard protocol in the field of communication, such as an LTE protocol, an NR protocol, and relevant protocols to be applied in future communication systems, which are not limited herein.

Described above are merely exemplary embodiments of the present disclosure, and are not intended to limit the present disclosure. Therefore, any modifications, equivalent substitutions, improvements, and the like made within the spirit and principles of the present disclosure shall be fall within the protection scope of the present disclosure.

## Claims

1. A method for zero-power communication, applicable to a zero-power device, wherein the zero-power device supports at least two reflection modes, and the method comprises:
receiving an input signal; and
determining, in response to a trigger of the input signal, a reflection mode of the zero-power device from the at least two reflection modes.

2. The method according to claim 1, wherein the at least two different reflection modes differ in at least one of:
a communication protocol type of a reflected signal;
a packet size of a reflected signal;
an information type of a reflected signal;
a reflection period of a reflected signal;
a data rate of a reflected signal;
an operating frequency of a reflected signal; or
an operating frequency of the input signal.

3. The method according to claim 1 or 2, wherein determining, in response to the trigger of the input signal, the reflection mode of the zero-power device from the at least two reflection modes comprises:
determining, in response to a signal energy detection result of the input signal, the reflection mode of the zero-power device from the at least two reflection modes; or
determining, in response to a signal reception demodulation result of the input signal, the reflection mode of the zero-power device from the at least two reflection modes; or
determining, in response to a signal frequency of the input signal being a first frequency, a first reflection mode corresponding to the first frequency from the at least two reflection modes as the reflection mode of the zero-power device, wherein the first frequency is one of at least one frequency that triggers determining the reflection mode; or
determining, in response to a transmit power of the input signal corresponding to a first mapping level, a first reflection mode corresponding to the first mapping level from the at least two reflection modes as the reflection mode of the zero-power device, wherein the first mapping level is one of at least one mapping level that triggers determining the reflection mode.

4. The method according to claim 3, wherein determining, in response to the signal energy detection result of the input signal, the reflection mode of the zero-power device from the at least two reflection modes comprises:
determining, in response to an amplitude of energy of the input signal reaching a first threshold, a first reflection mode corresponding to a first frequency from the at least two reflection modes as the reflection mode of the zero-power device, wherein the first threshold is one of at least one threshold that triggers determining the reflection mode; or
determining, in response to a time-domain feature of energy of the input signal being a first time-domain feature, a first reflection mode from the at least two reflection modes as the reflection mode of the zero-power device based on an order indicated by a list of predefined reflection modes, wherein the list of predefined reflection modes comprises the at least two reflection modes, and the first time-domain feature is one of at least one time-domain feature that triggers determining the reflection mode.

5. The method according to claim 3, wherein determining, in response to the signal energy detection result of the input signal, the reflection mode of the zero-power device from the at least two reflection modes comprises:
determining, in response to information acquired by demodulating the input signal being first information, a first reflection mode corresponding to the first information from the at least two reflection modes as the reflection mode of the zero-power device, wherein the first information is one of at least one information that triggers determining the reflection mode; or
determining, in response to a phase conversion feature acquired by demodulating the input signal being a first phase conversion feature, a first reflection mode from the at least two reflection modes as the reflection mode of the zero-power device based on an order indicated by a list of predefined reflection modes, wherein the list of predefined reflection modes comprises the at least two reflection modes, and the first phase conversion feature is one of at least one phase conversion feature that triggers determining the reflection mode.

6. The method according to any one of claims 1 to 5, wherein the input signal comprises at least one of:
a power sourcing signal, configured to supply power to the zero-power device;
a carrier signal, configured to trigger, as an incoming signal, the zero-power device to transmit a reflected signal; or
an activation signal, configured to activate the zero-power device to transmit the reflected signal by a first reflection mode.

7. The method according to claim 6, wherein
the power sourcing signal, the carrier signal, and the activation signal are mutually independent; or
the power sourcing signal and the carrier signal are mutually coupled, and the power sourcing signal and the activation signal are mutually independent; or
the activation signal and the carrier signal are mutually coupled, and the activation signal and the power sourcing signal are mutually independent; or
the activation signal and the power sourcing signal are mutually coupled, and the activation signal and the carrier signal are mutually independent; or
the power sourcing signal, the carrier signal, and the activation signal are mutually coupled.

8. The method according to claim 7, wherein being mutually independent means being independent in at least one of:
an operating frequency, an operating time, or an operating spatial direction.

9. The method according to claim 7, wherein being mutually coupled means being coupled in at least one of:
an operating frequency, an operating time, or an operating spatial direction.

10. The method according to any one of claims 1 to 9, wherein determining the reflection mode of the zero-power device from the at least two reflection modes comprises:
selecting a first reflection mode from the at least two reflection modes as the reflection mode of the zero-power device; or
switching the reflection mode of the zero-power device from a second reflection mode to a first reflection mode.

11. A method for zero-power communication, applicable to a node device, the method comprising:
transmitting an input signal to a zero-power device, such that the zero-power device determines, in response to a trigger of the input signal, a reflection mode of the zero-power device from at least two reflection modes, wherein the zero-power device supports the at least two reflection modes.

12. The method according to claim 11, wherein the at least two different reflection modes differ in at least one of:
a communication protocol type of a reflected signal;
a packet size of a reflected signal;
an information type of a reflected signal;
a reflection period of a reflected signal;
a data rate of a reflected signal;
an operating frequency of a reflected signal; or
an operating frequency of the input signal.

13. The method according to claim 11 or 12, wherein
the zero-power device determines, in response to a signal energy detection result of the input signal, the reflection mode of the zero-power device from the at least two reflection modes; or
the zero-power device determines, in response to a signal reception demodulation result of the input signal, the reflection mode of the zero-power device from the at least two reflection modes; or
the zero-power device determines, in response to a signal frequency of the input signal being a first frequency, a first reflection mode corresponding to the first frequency from the at least two reflection modes as the reflection mode of the zero-power device, wherein the first frequency being a frequency of at least one frequency that triggers determining the reflection mode; or
the zero-power device determines, in response to a transmit power of the input signal corresponding to a first mapping level, a first reflection mode corresponding to the first mapping level from the at least two reflection modes as the reflection mode of the zero-power device, wherein the first mapping level is one of at least one mapping level that triggers determining the reflection mode.

14. The method according to claim 13, wherein the zero-power device determining, in response to the signal energy detection result of the input signal, the reflection mode of the zero-power device from the at least two reflection modes comprises:
determining, in response to an amplitude of energy of the input signal reaching a first threshold, a first reflection mode corresponding to a first frequency from the at least two reflection modes as the reflection mode of the zero-power device, wherein the first threshold is one of at least one threshold that triggers determining the reflection mode; or
determining, in response to a time-domain feature of energy of the input signal being a first time-domain feature, a first reflection mode from the at least two reflection modes as the reflection mode of the zero-power device based on an order indicated by a list of predefined reflection modes, wherein the list of predefined reflection modes comprises the at least two reflection modes, and the first time-domain feature is one of at least one time-domain feature that triggers determining the reflection mode.

15. The method according to claim 13, wherein the zero-power device determining, in response to the signal reception demodulation result of the input signal, the reflection mode of the zero-power device from the at least two reflection modes comprises:
determining, in response to information acquired by demodulating the input signal being first information, a first reflection mode corresponding to the first information from the at least two reflection modes as the reflection mode of the zero-power device, wherein the first information is one of at least one information that triggers determining the reflection mode; or
determining, in response to a phase conversion feature acquired by demodulating the input signal being a first phase conversion feature, a first reflection mode from the at least two reflection modes as the reflection mode of the zero-power device based on an order indicated by a list of predefined reflection modes, wherein the list of predefined reflection modes comprises the at least two reflection modes, and the first phase conversion feature is one of at least one phase conversion feature that triggers determining the reflection mode.

16. The method according to any one of claims 11 to 15, wherein the input signal comprises at least one of:
a power sourcing signal, configured to supply power to the zero-power device;
a carrier signal, configured to trigger, as an incoming signal, the zero-power device to transmit a reflected signal; or
an activation signal, configured to activate the zero-power device to transmit the reflected signal by a first reflection mode.

17. The method according to claim 16, wherein
the power sourcing signal, the carrier signal, and the activation signal are mutually independent; or
the power sourcing signal and the carrier signal are mutually coupled, and the power sourcing signal and the activation signal are mutually independent; or
the activation signal and the carrier signal are mutually coupled, and the activation signal and the power sourcing signal are mutually independent; or
the activation signal and the power sourcing signal are mutually coupled, and the activation signal and the carrier signal are mutually independent; or
the power sourcing signal, the carrier signal, and the activation signal are mutually coupled.

18. The method according to claim 17, wherein being mutually independent means being independent in at least one of:
an operating frequency, an operating time, or an operating spatial direction.

19. The method according to claim 17, wherein being mutually coupled means being coupled in at least one of:
an operating frequency, an operating time, or an operating spatial direction.

20. The method according to any one of claims 11 to 19, wherein the zero-power device determining the reflection mode of the zero-power device from the at least two reflection modes comprises:
selecting a first reflection mode from the at least two reflection modes as the reflection mode of the zero-power device; or
switching the reflection mode from a second reflection mode to a first reflection mode.

21. The method according to any one of claims 11 to 20, wherein the node device comprises:
a network device; or
a customer premise equipment (CPE).

22. An apparatus for zero-power communication, wherein the apparatus supports at least two reflection modes, and the apparatus comprises a signal receiving module and a mode determining module; wherein
the signal receiving module is configured to receive an input signal; and
the mode determining module is configured to determine, in response to a trigger of the input signal, a reflection mode of the apparatus from the at least two reflection modes.

23. An apparatus for zero-power communication, wherein the apparatus supports at least two reflection modes and the apparatus comprises a signal transmitting module; wherein
the signal transmitting module is configured to transmit an input signal to a zero-power device, such that the zero-power device determines, in response to a trigger of the input signal, a reflection mode of the zero-power device from the at least two reflection modes, wherein the zero-power device supports the at least two reflection modes.

24. A terminal device, comprising: a transceiver and a processor; wherein
the processor is configured to receive an input signal; and
the transceiver is configured to determine, in response to a trigger of the input signal, a reflection mode from at least two reflection modes.

25. A node device, comprising: a transceiver; wherein
the transceiver is configured to transmit an input signal to a zero-power device, such that the zero-power device determines, in response to a trigger of the input signal, a reflection mode of the zero-power device from at least two reflection modes, wherein the zero-power device supports the at least two reflection modes.

26. A computer-readable storage medium, storing at least one executable instruction therein, wherein the at least one executable instruction, when loaded and executed by a processor, causes the processor to perform the method for zero-power communication as defined in any one of claims 1 to 21.

27. A chip, comprising: at least one programmable logic circuit and/or at least one program instruction, wherein the chip, when running, is caused to perform the method for zero-power communication as defined in any one of claims 1 to 21.

28. A computer program product, wherein the computer program product or a computer program comprises at least one computer instruction stored in a computer-readable storage medium, wherein the at least one computer instruction, when read from the computer-readable storage medium and executed by a processor, causes the processor to perform the method for zero-power communication as defined in any one of claims 1 to 21.
